# EUROPEAN PATENT APPLICATION

(11) **EP 4 328 875 A1**
(43) Date of publication of application: **28.02.2024**
(21) Application number: 23159700.6
(22) Date of filing: 02.03.2023
(51) Int. Cl.: G07C 5/08

(54) **CONTROL METHOD AND APPARATUS FOR VEHICLE DATA COLLECTION**

(30) Priority: 23.08.2022 CN 202211012772
(71) Applicant: Chongqing Changan Automobile Co., Ltd., Chongqing 400023 (CN)
(72) Inventor: TIAN, Shengming, Chongqing, 400023 (CN); LONG, Meiyuan, Chongqing, 400023 (CN); HAO, Jinlong, Chongqing, 400023 (CN); DAI, Jiao, Chongqing, 400023 (CN)
(74) Representative: Staeger & Sperling Partnerschaftsgesellschaft mbB

(57) **Abstract**

A fuse control method and apparatus for a vehicle data collection are provided. The method includes: acquiring a fuse file, where the fuse file includes a fuse condition and a fuse strategy; transforming the fuse strategy in the fuse file to obtain a fuse instruction corresponding to the fuse strategy; monitoring a running state of a collection engine in real time, and determining whether the running state of the collection engine satisfies the fuse condition; and when the running state of the collection engine satisfies the fuse condition, sending the fuse instruction to the collection engine, to control the collection engine to perform a fuse collection according to the fuse instruction. Thus, the problem that a collection quality is affected by abnormalities of a vehicle collection controller due to mass data is solved, and a fuse collection function is realized by configuring the collection fuse strategy in a cloud and acquiring data on a vehicle side according to the fuse strategy, thereby improving the collection quality.

## Description

### Field of the Invention

The present application relates to the technical field of Internet of vehicles, in particular to a fuse control method and apparatus for a vehicle data collection.

### Background of the Invention

At present, with the continuous development of Internet of vehicles and high-level automatic driving technology, automobile handlers' requirements for a scale, accuracy, multi-mode and real-time capability of data are constantly improving, a data collection controller can no longer meet a data demand, and a collection task of mass data has affected the performances of a data collection controller and a data processing controller of a vehicle side, resulting in short lives of the data collection controller and the data processing controller, a system crash, slow operations of the controllers, and the like, thereby affecting the driving safety of the vehicle and the loss of important data.

In related technologies, the data demand is usually met by changing the overall framework and improving the performances of the controllers, but huge resources, including manpower, expenditure, time, and the like are needed. In addition, with the increasing data demand, the controllers of the vehicle side will be in saturation state, thereby affecting the quality of data collection.

### Summary of the Invention

The present application provides a fuse control method and apparatus for a vehicle data collection, which solve the problem that a collection quality is affected by abnormalities of a vehicle collection controller due to mass data, and realize a fuse collection function by configuring a collection fuse strategy in a cloud and acquiring data on a vehicle side according to the fuse strategy, thereby improving the collection quality.

An embodiment in a first aspect of the present application provides a fuse control method for a vehicle data collection, including the following steps: acquiring a fuse file matched by a cloud according to configuration information, where the fuse file includes a fuse condition and a fuse strategy; transforming the fuse strategy in the fuse file to obtain a fuse instruction corresponding to the fuse strategy; monitoring a running state of a collection engine in real time, and determining whether the running state of the collection engine satisfies the fuse condition; and when the running state of the collection engine satisfies the fuse condition, sending the fuse instruction to the collection engine, to control the collection engine to perform a fuse collection according to the fuse instruction.

According to the above-mentioned technical means, a fuse strategy and a corresponding fuse condition are configured in a cloud in the embodiment of the present application, so that a vehicle side acquires the fuse strategy and executes the corresponding fuse strategy when the fuse condition is satisfied, thereby improving the collection quality.

Optionally, the step of acquiring a fuse file includes: acquiring the fuse file of the cloud according to the configuration information when a vehicle start signal is received and any fuse file is not detected out.

Optionally, the fuse strategy includes collection stop, data classification collection, only collection without transfer, and data frequency reduction collection, where each fuse strategy corresponds to one or more fuse conditions, so that the vehicle side uses the corresponding fuse strategy to perform the fuse collection according to the fuse condition.

Optionally, the data classification collection includes: performing event level classification according to an emergency corresponding to each resource of the collection engine; classifying data according to data types; and giving each data type a corresponding priority level, where the priority level is used for representing a degree of importance of the corresponding data type, to collect data of different priority data types preferentially according to different levels of events.

According to the above-mentioned technical means, the collection engine executes the corresponding fuse strategy, which can control and designate the collection engine to collect according to requirements, satisfy a remote cloud fuse configuration strategy, and ensure a safe operation of the collection engine.

Optionally, when the resource emergency of the collection engine is greater than a first threshold value, an advanced event level is triggered, and data of a high-priority data type are collected preferentially; when the resource emergency of the collection engine is less than or equal to the first threshold value and greater than a second threshold value, a medium event level is triggered, and data of a high-priority data type and data of a medium-priority data type are collected preferentially in turn; when the resource emergency of the collection engine is less than or equal to the second threshold value and greater than a third threshold value, a low event level is triggered, and data of a high-priority data type, data of a medium-priority data type and data of a low-priority data type are collected preferentially in turn; and when the resource emergency of the collection engine is less than or equal to the third threshold value, any event level is not triggered.

Optionally, the frequency reduction collection includes: when the collection engine of the vehicle side triggers the advanced event level or the medium event level and needs to collect full data, acquiring a predetermined frequency to replace a current frequency for data collection, where the predetermined frequency is less than the current frequency.

According to the above-mentioned technical means, the collection engine can perform a frequency reduction collection of data according to a demand, to ensure the integrity of normal data run on the vehicle side.

Optionally, the fuse file further includes a fuse recovery condition, and a fuse recovery instruction is sent to the collection engine when the running state of the collection engine satisfies the fuse recovery condition, to control the collection engine to perform a normal collection.

According to the above-mentioned technical means, the collection engine can recover the collection according to the fuse recovery instruction, and cannot be limited by fuse conditions after recovery.

An embodiment in a second aspect of the present application provides a fuse control method for a vehicle data collection, including the following steps: receiving configuration information of a vehicle side; matching a fuse file according to the configuration information, where the fuse file includes a fuse condition and a fuse strategy; and sending the matched fuse file to the vehicle side so that the vehicle side transforms the fuse strategy in the fuse file to obtain a fuse instruction corresponding to the fuse strategy, and sending the fuse instruction to a collection engine when a running state of the collection engine satisfies the fuse condition, to control the collection engine to perform a fuse collection according to the fuse instruction.

Optionally, the step of matching a fuse file according to the configuration information includes: identifying the vehicle side according to the configuration information; and matching the fuse file in a fuse file library according to the configuration information after the identification succeeds.

Optionally, editable fuse files configured in advance according to a vehicle configuration mapping table are stored in the fuse file library.

Optionally, the fuse strategy includes collection stop, data classification collection, only collection without transfer, and data frequency reduction collection, where each fuse strategy corresponds to one or more fuse conditions, so that the vehicle side uses the corresponding fuse strategy to perform the fuse collection according to the fuse condition.

Optionally, the data classification collection includes: performing event level classification according to an emergency corresponding to each resource of the collection engine; classifying data according to data types; and giving each data type a corresponding priority level, where the priority level is used for representing a degree of importance of the corresponding data type, to collect data of different priority data types preferentially according to different levels of events.

Optionally, when the resource emergency of the collection engine is greater than a first threshold value, an advanced event level is triggered, and data of a high-priority data type are collected preferentially; when the resource emergency of the collection engine is less than or equal to the first threshold value and greater than a second threshold value, a medium event level is triggered, and data of a high-priority data type and data of a medium-priority data type are collected preferentially in turn; when the resource emergency of the collection engine is less than or equal to the second threshold value and greater than a third threshold value, a low event level is triggered, and data of a high-priority data type, data of a medium-priority data type and data of a low-priority data type are collected preferentially in turn; and when the resource emergency of the collection engine is less than or equal to the third threshold value, any event level is not triggered.

Optionally, the frequency reduction collection includes: when the collection engine of the vehicle side triggers the advanced event level or the medium event level and needs to collect full data, a predetermined frequency is acquired to replace a current frequency for data collection, where the predetermined frequency is less than the current frequency.

Optionally, the fuse file further includes a fuse recovery condition, so that the vehicle side sends a fuse recovery instruction to the collection engine when the running state of the collection engine satisfies the fuse recovery condition, to control the collection engine to perform a normal collection.

An embodiment in a third aspect of the present application provides a fuse control apparatus for a vehicle data collection, including: an acquisition module, configured to acquire a fuse file, where the fuse file includes a fuse condition and a fuse strategy; a processing module, configured to transform the fuse strategy in the fuse file to obtain a fuse instruction corresponding to the fuse strategy; a monitoring and determination module, configured to monitor a running state of a collection engine in real time and determine whether the running state of the collection engine satisfies the fuse condition; and a transfer control module, configured to, when the running state of the collection engine satisfies the fuse condition, send the fuse instruction to the collection engine, to control the collection engine to perform a fuse collection according to the fuse instruction.

An embodiment in a fourth aspect of the present application provides a fuse control apparatus for a vehicle data collection, including: a receiving module, configured to receive configuration information of a vehicle side; a matching module, configured to match a fuse file according to the configuration information, where the fuse file includes a fuse condition and a fuse strategy; and a sending module, configured to send the matched fuse file to the vehicle side so that the vehicle side transforms the fuse strategy in the fuse file to obtain a fuse instruction corresponding to the fuse strategy, and send the fuse instruction to a collection engine when a running state of the collection engine satisfies the fuse condition, to control the collection engine to perform a fuse collection according to the fuse instruction.

The embodiments of the present application solve the problem that a collection quality is affected by abnormalities of a vehicle collection controller due to mass data, and realize a fuse collection function by configuring the collection fuse strategy in the cloud and acquiring data on the vehicle side according to the fuse strategy, thereby improving the collection quality.

Additional aspects and advantages of the present application will be set forth in part in the following description, and partially become self-evident therefrom, or be understood by practice of the present application.

### Brief Description of the Drawings

The above and/or additional aspects and advantages of the present application will become self-evident and readily understood from the following description of embodiments with reference to the accompanying drawings. In the drawings:
Fig. 1 is a flowchart of a fuse control method for a vehicle data collection according to an embodiment of the present application;
Fig. 2 is a flowchart of a vehicle side fuse mechanism according to an embodiment of the present application;
Fig. 3 is a flowchart of a vehicle side fuse recovery mechanism according to an embodiment of the present application;
Fig. 4 is a flowchart of a fuse control method for a vehicle data collection according to an embodiment of the present application;
Fig. 5 is an interactive flowchart of a fuse control method for a vehicle data collection according to an embodiment of the present application;
Fig. 6 is a functional frame diagram of a fuse engine according to an embodiment of the present application;
Fig. 7 is an architecture diagram of a cloud fuse management system according to an embodiment of the present application;
Fig. 8 is a schematic block diagram of a fuse control apparatus for a vehicle data collection according to an embodiment of the present application; and
Fig. 9 is a schematic block diagram of a fuse control apparatus for a vehicle data collection according to an embodiment of the present application.

### Detailed Description of the Embodiments

Embodiments of the present application will be described in detail below. Examples of the embodiments are shown in the accompanying drawings. The same or similar reference signs throughout the drawings denote the same or similar elements or elements having the same or similar functions. The embodiments described below by reference to the drawings are exemplary, are intended to explain the present application, but are not to be construed as limiting the present application.

A fuse control method and apparatus for a vehicle data collection according to the embodiments of the present application will be described below with reference to the drawings. In view of the phenomena mentioned in the Background of the Invention, such as short lives of the data collection controller and the data processing controller, a system crash, slow operations of the controllers, and the like, thereby affecting the driving safety of the vehicle and the loss of important data, the present application provides a fuse control method for a vehicle data collection. In the method, a fuse file configured by a cloud may be acquired, where the fuse file includes a fuse condition and a fuse strategy; the fuse strategy in the fuse file is transformed to obtain a fuse instruction corresponding to the fuse strategy; a running state of a collection engine is monitored in real time, and whether the running state of the collection engine satisfies the fuse condition is determined; and when the running state of the collection engine satisfies the fuse condition, the fuse instruction is sent to the collection engine, to control the collection engine to perform a fuse collection according to the fuse instruction. Thus, a fuse collection function is realized by configuring the collection fuse strategy in the cloud and acquiring data on a vehicle side according to the fuse strategy, thereby improving the collection quality.

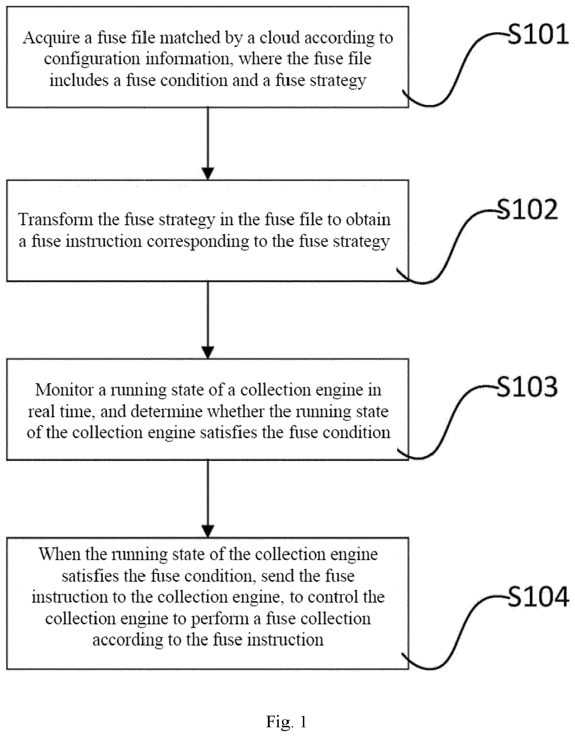

Specifically, Fig. 1 is a schematic flowchart of a fuse control method for a vehicle data collection according to an embodiment of the present application.

As shown in Fig. 1, the fuse control method for a vehicle data collection is applied to a fuse engine of a vehicle side, and includes the following steps:
At step S101, a fuse file matched by a cloud according to configuration information is acquired, where the fuse file includes a fuse condition and a fuse strategy.

Optionally, in some embodiments, the step that a fuse file is acquired includes: the fuse file of the cloud is acquired according to the configuration information when a vehicle start signal is received and any fuse file is not detected out.

That is, when the vehicle is in a start state and the speed of the vehicle is 0, the collection engine sends the vehicle start signal to the fuse engine, so that the fuse engine detects fuse files after receiving the vehicle start signal, and acquires the fuse file of the cloud according to calling parameters when any fuse file is not detected out.

It should be noted that the collection engine of the vehicle side is a controller for data collection, storage, transfer, and processing.

At step S102, the fuse strategy in the fuse file is transformed to obtain a fuse instruction corresponding to the fuse strategy.

It should be noted that the fuse engine, after receiving the fuse strategy configured by the cloud, transforms the fuse strategy into a corresponding fuse instruction and stores same in an instruction library.

Optionally, in some embodiments, the fuse strategy includes collection stop, data classification collection, only collection without transfer, and data frequency reduction collection, where each fuse strategy corresponds to one or more fuse conditions, so that the vehicle side uses the corresponding fuse strategy to perform a fuse collection according to the fuse condition.

Optionally, in some embodiments, the data classification collection includes that data are classified according to data types, where the data types may include at least one of a user service class, national standard data, a data closed-loop class, and an operation analysis class; and each data type is given a corresponding priority level, where the priority level is used for representing a degree of importance of the corresponding data type, to collect data of different priority data types preferentially according to different levels of events.

That is, when the resource emergency of the collection engine is greater than a first threshold value, an advanced event level is triggered, and data of a high-priority data type are collected preferentially; when the resource emergency of the collection engine is less than or equal to the first threshold value and greater than a second threshold value, a medium event level is triggered, and data of a high-priority data type and data of a medium-priority data type are collected preferentially in turn; when the resource emergency of the collection engine is less than or equal to the second threshold value and greater than a third threshold value, a low event level is triggered, and data of a high-priority data type, data of a medium-priority data type and data of a low-priority data type are collected preferentially in turn; and when the resource emergency of the collection engine is less than or equal to the third threshold value, any event level is not triggered.

It should be noted that the first threshold value is greater than the second threshold value, and the second threshold value is greater than the third threshold value.

Specifically, the cloud classifies automatically, according to data types, data into a user service class, a national standard data class, a data closed-loop class, and an operation analysis class, where the data types may be classified according to degrees of importance of the data (except the national standard data class) into levels 1/ 2/ 3, with priorities decreasing in turn; when the vehicle side triggers a level 1 fuse event, data of the national standard data class are ensured to be normally uploaded to the cloud; when the vehicle side triggers a level 2 fuse event, data of the national standard data class are ensured preferentially first to be uploaded to the cloud, data of the user service class are then ensured to be uploaded to the cloud, data of the data closed-loop class are next ensured to be uploaded to the cloud, data of the operation analysis class are finally ensured to be uploaded to the cloud, and the vehicle side may configure dynamically, according to a running resource situation of the controller, the types of data uploaded to the cloud; when the vehicle side triggers a level 3 fuse event, a service side needs to collect the four data types; therefore, the configuration of data levels for priority collection on the vehicle side ensures that each type of level 1/ 2 data are normally uploaded to the cloud and level 3 data may not be collected.

The resources of the collection engine may include a CPU load rate, bandwidth resources, device power, a network state, strengths and storage resources, where when the CPU load rate of the collection engine is greater than 90%, a level 1 event is triggered, and national standard data and user service class data may be collected preferentially; and when the CPU load rate of the collection engine is greater than 80%, a level 2 event is triggered, and national standard data, user service class data and data closed-loop class data may be collected preferentially.

Optionally, in some embodiments, the frequency reduction collection includes:when all data need to be collected, a predetermined frequency is acquired to replace a current frequency for data collection, where the predetermined frequency is less than the current frequency.

Specifically, when a data service side desires to collect all data (suitable for level 1/ level 2 fuse events), all data in a vehicle model list may be collected and uploaded by means of the data frequency reduction collection.

At step S103, a running state of a collection engine is monitored in real time, and whether the running state of the collection engine satisfies the fuse condition is determined.

That is, the fuse engine monitors the running state of the collection engine in real time, and when the running state of the collection engine satisfies the fuse condition, it is considered that the collection engine may have any one or more fuse triggering events such as an excessive high load rate, a bandwidth upper limit alarm, a storage resource emergency, a low power emergency, a network abnormality, and a network disconnection.

At step S104, when the running state of the collection engine satisfies the fuse condition, the fuse instruction is sent to the collection engine, to control the collection engine to perform a fuse collection according to the fuse instruction.

It should be noted that the fuse instruction includes an ID of the collection engine, a collection stop in the collection engine, a duration of the collection stop, or a collection or only a collection without transfer that is performed by the collection engine according to the data classification. For example, when the running power of Tbox is 10%, a fuse is triggered, and the fuse engine alarms the Tbox that the power is too low, where data may be collected locally without transfer. For another example, the fuse engine, when recognizing that the computing power of an MPU is in an emergency, notifies a perception sensor to stop collecting or reduce the frequency for collection, to avoid an MPU system crash due to an excessive data volume. The collection engine executes the corresponding fuse strategy, which can control and designate the collection engine to collect according to requirements, satisfy a cloud fuse configuration strategy, and ensure a safe operation of the collection engine.

To sum up, in the embodiment of the present application, a fuse file is acquired, where the fuse file includes a fuse condition and a fuse strategy; the fuse strategy in the fuse file is transformed to obtain a fuse instruction corresponding to the fuse strategy; a running state of a collection engine is monitored in real time, and whether the running state of the collection engine satisfies the fuse condition is determined; when the running state of the collection engine satisfies the fuse condition, the fuse instruction is sent to the collection engine, to control the collection engine to perform a fuse collection according to the fuse instruction; thus, the problem that a collection quality is affected by abnormalities of a vehicle collection controller due to mass data is solved, and a fuse collection function is realized by configuring the collection fuse strategy in a cloud and acquiring data on a vehicle side according to the fuse strategy, thereby improving the collection quality.

Optionally, in some embodiments, the fuse file in the fuse control method for a vehicle data collection further includes a fuse recovery condition, and a fuse recovery instruction is sent to the collection engine when the running state of the collection engine satisfies the fuse recovery condition, to control the collection engine to perform a normal collection.

That is, the vehicle side has a data fuse recovery strategy mechanism. When the running state of the collection engine monitored by the fuse engine in real time satisfies the fuse recovery condition, the fuse engine configures the fuse strategy in a failure state and issues the fuse recovery instruction, and the collection engine recovers to a normal state and is not controlled by the fuse strategy. When the next fuse condition is triggered, the fuse engine fails to find the latest fuse strategy, and the latest failed fuse strategy may be recovered and enabled.

In order for those skilled in the art to further understand the fuse control method for a vehicle data collection according to the embodiment of the present application, a detailed description is provided below in conjunction with a specific embodiment.

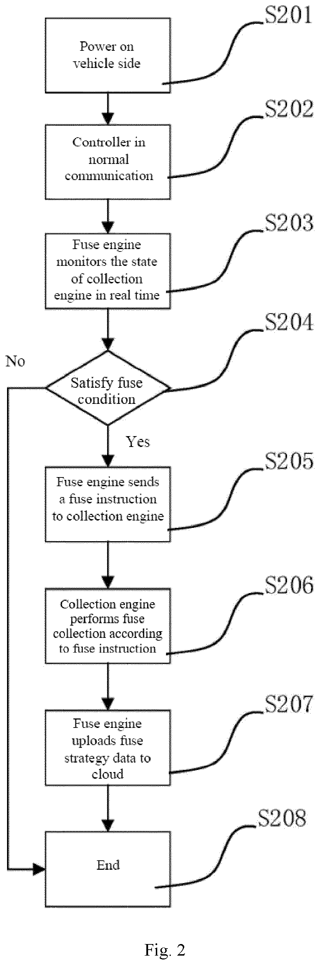

Specifically, as shown in Fig. 2, which is a flowchart of a vehicle side fuse mechanism according to a specific embodiment of the present application, the vehicle side fuse mechanism includes the following steps:
At S201, the vehicle side is powered on.
At S202, the controller is in normal communication.
At S203, the fuse engine monitors the state of the collection engine in real time.
At S204, whether the fuse condition is satisfied is determined, if so, step S205 is executed, otherwise, step S208 is executed.
At S205, the fuse engine sends a fuse instruction to the collection engine.
At S206, the collection engine performs a fuse collection according to the fuse instruction.
At S207, the fuse engine uploads fuse strategy data to the cloud.
At S208, the flow is ended.

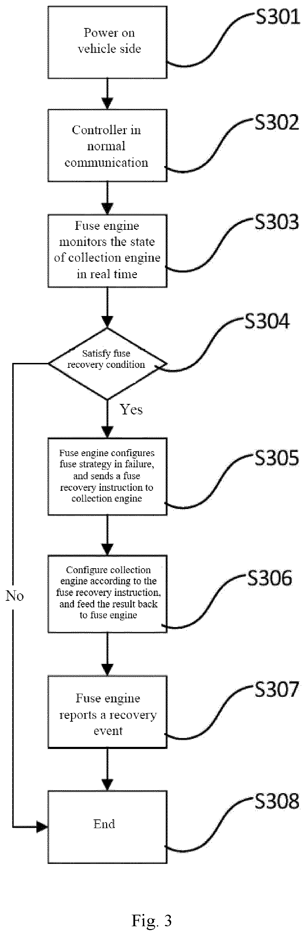

In addition, as shown in Fig. 3, which is a flowchart of a vehicle side fuse recovery mechanism according to a specific embodiment of the present application, the vehicle side fuse recovery mechanism includes the following steps:
At S301, the vehicle side is powered on.
At S302, the controller is in normal communication.
At S303, the fuse engine monitors the state of the collection engine in real time.
At S304, whether the fuse recovery condition is satisfied is determined, if so, step S305 is executed, otherwise, step S308 is executed.
At S305, the fuse engine configures the fuse strategy in failure, and sends a fuse recovery instruction to the collection engine.
At S306, the collection engine is configured according to the fuse recovery instruction, and feeds the result back to the fuse engine.
At S307, the fuse engine reports a recovery event.
At S308, the flow is ended.

A plurality of specific examples are illustrated below.

As the first example, a person in charge of a vehicle side evaluates, according to resources of a vehicle controller, a demand of uploading data to a cloud. Due to the back-and-forth evaluation, the progress of a project of uploading data to the cloud is slow, which retards landing of digital products and weakens market competitiveness. After the vehicle side fuse function is realized, the evaluation is not needed, and the vehicle automatically realizes a fuse collection function, thereby saving manpower and time and accelerating the progress of a data project. For example, a DTC is added to a traditional vehicle model to trigger a CAN data collection demand, including 110 data IDs and 40 fault triggering codes, and the person in charge of the vehicle side performs evaluates back and forth for nearly two months, where the evaluation results are not feasible because storage resources meet requirements under normal circumstances but do not meet the requirements in extreme cases. After the vehicle side fuse function is realized, a collection can be implemented without evaluation, mainly because the DTC triggers CAN messages in extreme cases at excessive frequencies. When the storage resources of an MPU monitored by the fuse engine are greater than a predetermined upper limit (500MB), a fuse collection is triggered, the fuse engine sends an instruction to the MPU to stop the DTC associated CAN message data collection, and data are collected after the MPU is normal to protect the collection engine. In fact, the data before the storage emergency have been uploaded to the cloud for analyzing and protecting the collection engine of the vehicle side.

The fuse collection refers to, when the fuse engine monitors that the running state of the collection engine is about to be in an abnormal state, a measure of controlling the collection engine by a code to stop collecting, controlling some engines to stop collecting, collecting some important data, performing a frequency reduction collection on data, or the like, to realize the healthy operation of the collection engine.

As the second example, data are uploaded to a cloud service side for feedback. Due to the shortage of resources in the collection engine of the vehicle side, quality problems of national standard data are caused, and the progress of enterprise services is hindered. After the vehicle side fuse collection function is realized, data may be classified, collected and uploaded, where the data of the national standard data class are uploaded preferentially, followed by the user service class. For example, when a vehicle is being directly connected to a new energy national platform for testing, the quality and real-time capability of data are required; and when the fuse engine monitors that Tbox bandwidth resources are in an emergency, a fuse collection is triggered, the fuse engine notifies the Tbox to report national standard data and user service class data, while other data are only collected but not transferred; and the fuse engine notifies a gateway to transfer the national standard data/user service class data, but not to transfer other data, to ensure a normal test of the national standard data and protect normal operations of user service functions.

As the third example, a data uploading cloud service side feeds back a data loss problem, which affects services. After investigation, it is found that the data loss problem is caused by the fact that a vehicle side controller cannot work normally due to a high load rate. When the vehicle side fuse function is realized, fuse parameters of the controller may be configured to ensure the normal operation of the controller.

As the fourth example, when a network disconnection or a network abnormality exists on the vehicle side, data are continuously covered due to the problems of storage resource, causing the loss of national standard data and important data of a user service class. When the vehicle side fuse collection function is realized, important data are ensured to the greatest extent and losses are reduced.

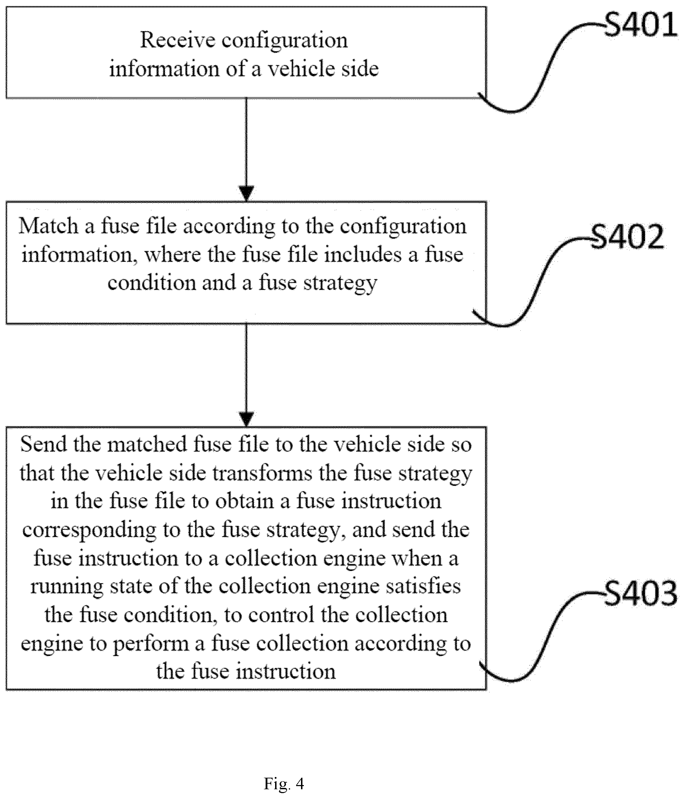

In addition, Fig. 4 is a flowchart of a fuse control method for a vehicle data collection according to an embodiment of the present application.

As shown in Fig. 4, the fuse control method for a vehicle data collection is applied to a cloud, and includes the following steps:
At S401, configuration information of a vehicle side is received;
At S402, a fuse file is matched according to the configuration information, where the fuse file includes a fuse condition and a fuse strategy; and
At S403, the matched fuse file is sent to the vehicle side so that the vehicle side transforms the fuse strategy in the fuse file to obtain a fuse instruction corresponding to the fuse strategy, and the fuse instruction is sent to a collection engine when a running state of the collection engine satisfies the fuse condition, to control the collection engine to perform a fuse collection according to the fuse instruction.

Optionally, in some embodiments, the step that a fuse file is matched according to the configuration information includes: the vehicle side is identified according to the configuration information; and the fuse file is matched in a fuse file library according to the configuration information after the identification succeeds.

Optionally, in some embodiments, editable fuse files configured in advance according to a vehicle configuration mapping table are stored in the fuse file library.

Optionally, in some embodiments, the fuse strategy includes collection stop, data classification collection, only collection without transfer, and data frequency reduction collection, where each fuse strategy corresponds to one or more fuse conditions, so that the vehicle side uses the corresponding fuse strategy to perform a fuse collection according to the fuse condition.

Optionally, in some embodiments, the data classification collection includes that data are classified according to data types, where the data types may include at least one of a user service class, national standard data, a data closed-loop class, and an operation analysis class; and each data type is given a corresponding priority level, where the priority level is used for representing a degree of importance of the corresponding data type, to collect data of different priority data types preferentially according to different levels of events.

As an embodiment, when the resource emergency of the collection engine is greater than a first threshold value, an advanced event level is triggered, and data of a high-priority data type are collected preferentially; when the resource emergency of the collection engine is less than or equal to the first threshold value and greater than a second threshold value, a medium event level is triggered, and data of a high-priority data type and data of a medium-priority data type are collected preferentially in turn; when the resource emergency of the collection engine is less than or equal to the second threshold value and greater than a third threshold value, a low event level is triggered, and data of a high-priority data type, data of a medium-priority data type and data of a low-priority data type are collected preferentially in turn; and when the resource emergency of the collection engine is less than or equal to the third threshold value, any event level is not triggered.

Optionally, in some embodiments, in some embodiments, the frequency reduction collection includes: when all data need to be collected, a predetermined frequency is acquired to replace a current frequency for data collection, where the predetermined frequency is less than the current frequency.

Optionally, in some embodiments, the fuse file in the fuse control method for a vehicle data collection further includes a fuse recovery condition, so that when the running state of the collection engine satisfies the fuse recovery condition, the vehicle side sends a fuse recovery instruction to the collection engine, to control the collection engine to perform a normal collection.

It should be noted that the cloud automatically matches corresponding fuse conditions, fuse recovery conditions and fuse strategies by means of a fuse management system according to vehicle side configuration information, to realize remote configuration files by flexible configuration and realize a vehicle side fuse collection function, thereby improving the collection quality.

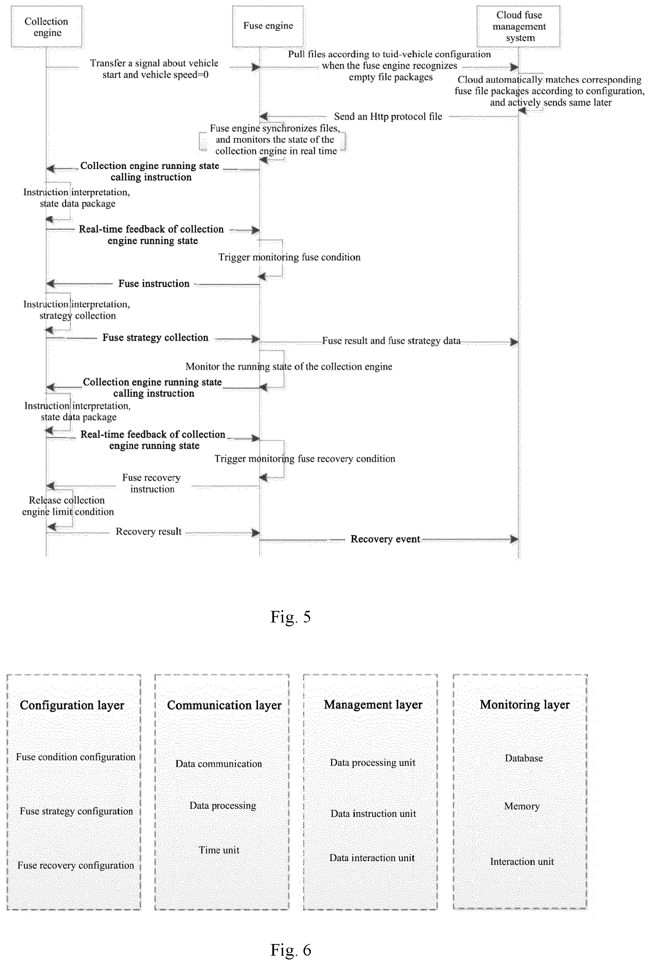

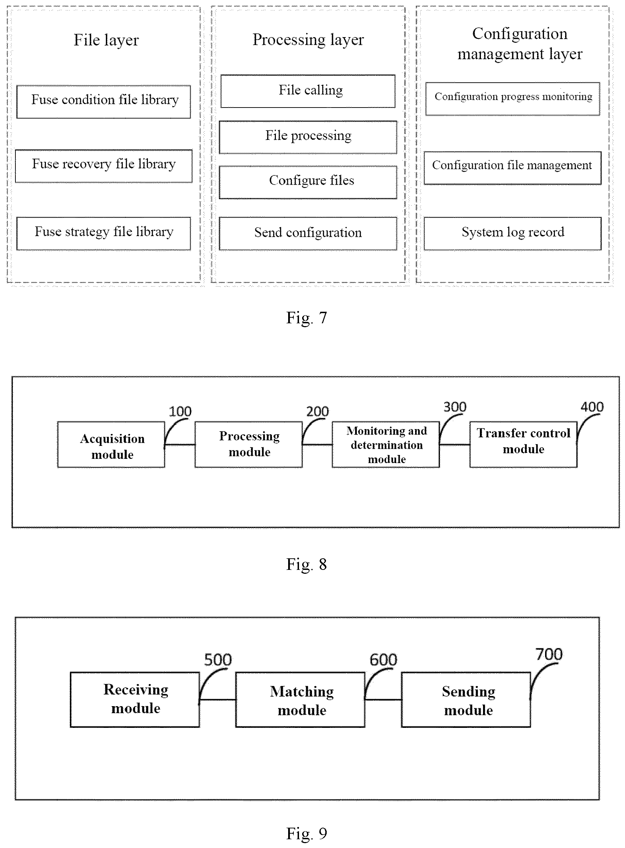

Specifically, Fig. 5 is an interactive flowchart of a fuse control method for a vehicle data collection according to a specific embodiment of the present application, showing an interactive process among a collection engine, a fuse engine and a cloud fuse management system; Fig. 6 is a functional frame diagram of the fuse engine; and Fig. 7 is an architecture diagram of the cloud fuse management system.

When a vehicle is in a start state and the speed of the vehicle is 0, the collection engine transfers a signal about vehicle start and vehicle speed=0 to the fuse engine, and a configuration layer is checked after the fuse engine is initialized. When it is detected that fuse condition, fuse recovery, and fuse strategy file packages in the configuration layer are empty, a communication layer of the fuse engine calls a file interface of the cloud fuse management system (which does not need to be called when the file packages already exist and there is no a latest version), and the cloud fuse management system is requested according to calling parameters to pull fuse condition, fuse recovery, and fuse strategy files, the parameters including information such as a tuid, an instruction type, vehicle configuration information, types of files pulled, and a single package size. The formats of the calling parameters are as follows:

```
     Test01.txt
     {
     "tuid": "1234567892222333333",
     "Instruction type": "0", // 0: pull file 1: data upload
     "Timestamp": "12345678933333", // specific to seconds
     "Vehicle configuration information": // the cloud automatically matches fuse
     conditions and fuse recovery conditions by identifying vehicle configuration
     information
     {
     "Configured vehicle series": "S66csplus", // name of vehicle series
     "Configuration type": "level 4", // configuration of specific vehicle series
     "Configuration level": "0001", // configuration level of specific vehicle series
     }
     "File rule":
     {
     "Event code": tsm001:
     {
     "Fuse pull file type": "1", // 0: fuse recovery 1: fuse condition 2: fuse strategy
     "File package requirements": "less than 10MB, exceeding a subpackage",
     }
     "Event code" : tsm002:
     {
     "Fuse pull file type": "0", // 0: fuse recovery 1: fuse condition 2: fuse strategy
     "File package requirements": "less than 10MB, exceeding a subpackage",
     }
     "Event code" : tsm003:
     {
     "Fuse pull file type": "2", // 0: fuse recovery 1: fuse condition 2: fuse strategy
     "File package requirements": "less than 10MB, exceeding a subpackage",
     }
     }
     }
```

A task layer of the cloud fuse management system identifies the vehicle according to the tuid when receiving a vehicle side in-parameter file and outputs the in-parameter file to a processing layer after the identification succeeds, the processing layer automatically matches a fuse file package according to in-parameter vehicle configuration information and file rules and calls a corresponding file package from a file layer (fuse condition file library/ fuse recovery file library/ fuse strategy file library) through an instruction, the processing layer sends the file package through a htpp protocol, and the cloud fuse management system may actively send fuse file packages according to needs and emergencies, where fuse conditions include trigger reasons such as an excessive load rate of the collection engine, a bandwidth upper limit alarm, a storage resource emergency, a low power emergency, a network abnormality, and a network disconnection, as well as corresponding events and event levels. For example, when the load rate of an MCU is greater than 80%, a fuse collection is triggered, the fuse event code is event001, and the fuse level is 2. For another example, when the storage space of an HU occupies more than 500MB, a fuse collection is triggered, the fuse event code is event005, and the fuse level is 1. Fuse strategies for triggering a fuse function include classification collection, data frequency reduction collection, partial data frequency reduction collection, collection stop in some collection engines, collection stop in all collection engines, and data report stop in the fuse engine (send only heartbeat messages). For example, for the fuse event code: event001, the classification fuse collection strategy may be employed, that is, only national standard data and user service class data are collected.

The above-mentioned fuse condition file library/ fuse recovery file library/ fuse strategy file library indicates that the cloud fuse management system has classified fuse conditions, fuse recovery conditions, and fuse strategies into Xn{X1, X2 ... Xn} groups according to all vehicle configuration mapping tables, which supports automatic matching of the system processing layer, and a data administrator may change the file layer.

The text formats of fuse conditions/ fuse recovery conditions /fuse strategies are as follows:

```
     Cdt.txt
  
     {
  
     "tuid": "1234567892222333333",
  
     "File type": "0", // 0: fuse condition 1: fuse recovery 2: fuse strategy
  
     "Timestamp": "1245664332", // specific to seconds
  
     "File rule":
  
     {
  
     "Collection engine ID 1": "MCU", // abbreviation of specific fuse collection engine
  
     "CPU load rate": "more than 80%, trigger the fuse function", // specific parameters
  
     "Event level": "2", // specific parameters
  
     "Fuse event": "event001",
  
     "Storage space occupation": "more than 50MB, trigger the fuse function", //
 specific parameters
      "Event level": "1", // specific parameters
  
     "Fuse event": "event002",
  
     "Collection engine ID2": "HU", // abbreviation of specific fuse collection engine
     "CPU load rate": "more than 90%, trigger the fuse function", // specific parameters
     "Event level": "1", // specific parameters
  
     "Fuse event": "event003"
  
     "Storage space occupation": "more than 500MB, trigger the fuse function", //
 specific parameters "Event level": "2", // specific parameters
  
     "Fuse event": "event004"
  
     "Bandwidth resource": "more than 500Mbps, trigger the fuse function", // specific
     parameters "Event level": "1", // specific parameters
  
     "Fuse event": "event005"
  
     "Collection engine ID3": "ADC", // abbreviation of specific fuse collection engine
     "Power": "less than 30%, trigger the fuse function", // specific power parameters
     "Event level": "1", // specific parameters
  
     "Fuse event": "event006"
  
     "Network state": "if the communication is abnormal or the communication quality
     is poor, trigger the fuse function",
  
     "Event level": "1", // specific parameters
  
     "Fuse event": "event00n"
    ...
     ...}
  
     "File type": "1", // 0: fuse condition 1: fuse recovery 2: fuse strategy "File rule":
  
     {
  
     "Fuse recovery event": "Rdhf001",:
  
     {
  
     "Collection engine ID 1": "MCU", // abbreviation of specific fuse collection engine
     "CPU load rate": "less than 50%, last for 30 seconds, recover to normal state", //
 specific parameters "Computing power load rate": "less than 50%, last for 30 seconds,
 recover to normal state", // specific parameters "Storage space occupation": "less than
 10MB, last for 1 mins, recover to normal state", // specific parameters}
    ...
  
     {
  
     "Fuse recovery event": "Rdhf005",:
  
     {
  
     "Collection engine ID2": "ADC", // abbreviation of specific collection engine
     "Power": "more than 60%, last for 30 seconds, recover to normal state", // specific
     parameters}
  
     "Fuse recovery event": "Rdhf00n",:
  
     {
   
     "Collection engine ID3": "ADC", //abbreviation of specific collection engine
     "Network state": "strong network, last for 30 seconds, recover to normal state", //
 specific parameters
  
     }
  
     }
  
     "File type": "2", // 0: fuse condition 1: fuse recovery 2: fuse strategy "File rule":
     {
  
     {
  
     "Fuse warning event eid": "event001":
  
     "Strategy id": "U1": // fuse event code corresponding to data strategy
  
     {
  
     "Data class": "national standard data", // national standard data are not classified
     "Data class": "user service class",
  
     "User service class":
  
     {
  
     "Data level": "1",
  
     "Data level": "2",
  
     }
  
     }
   
     }
  
     {
  
     "Fuse warning event eid": "event002":
  
     "Strategy id": "U2": // fuse event code corresponding to data strategy
  
     {
  
     "Data class": "national standard data", // national standard data are not classified
     "Data class": "user service class",
  
     "User service class":
  
     {
  
     "Data level": "1",
  
     "Data level": "2",
  
     "Data level": "3",
  
     }
  
     "Data class": "data closed-loop class",
  
     "Data closed-loop class":
  
     {
  
     "Data level": "1",
   
     "Data level": "2",
  
     "Data level": "3",
  
     }
  
     "Data class": "operation analysis class",
  
     "Operation analysis class":
  
     {
  
     "Data level": "1",
  
     "Data collection frequency reduction": "frequency", // specific frequency "Data
     level": "2",
  
     "Data collection frequency reduction": "frequency", // specific frequency "Data
     level": "3",
  
     "Data collection frequency reduction": "frequency", // specific frequency
  
     }
  
     }
  
     }
  
     {
  
     "Fuse warning event eid": "event00n":
     "Strategy id": "Un": // fuse event code corresponding to data strategy{
  
     "Collection engine": "only collection without transfer",
  
     }
  
     }
  
    ...
  
     }
  
     }
  
     }
```

The fuse engine, when receiving a fuse file package, performs data processing on the fuse file package, and configures a fuse condition, a fuse recovery condition, and a fuse strategy according to the data content of the fuse file package; the fuse engine transforms the fuse file package into a collection engine running state calling instruction and a fuse instruction, and stores the instructions in the instruction library; the fuse engine sends the collection engine running state calling instruction to the collection engine through a DDS protocol, where the running state calling instruction needs to specify the ID of the collection engine and data items to be monitored, for example, calling bandwidth resource data of the collection engine Tbox, CPU resource data, storage resource data, network strength data, and feedback state data period parameters; and the collection engine, when receiving the running state calling instruction, sends the contents involved in the running state calling instruction to the fuse engine periodically at a specified time, and the period may be adjusted according to the degree of importance of the collection engine.

The running state call instruction of the collection engine is in a struct format, the text format of which is as follows:

```
     {
     "Collection engine ID 1": "Tbox",
     "Timestamp": "1245664332", // specific to seconds
     "Tbox state information":
     {
     "Run data item 001": "CPU load rate" // feed back CPU load rate
     "Run data item 002": "bandwidth resources" // feed back bandwidth resources
     "Run data item 003": "device power" // feed backTbox power
     "Run data item 004": "network state, network strength" // feed back network state
     "Run data item 005": "storage resources" // feed back storage resource state
     "Data cycle": "10s", // the collection engine sends state data every 10s
     }
     "Collection engine ID2": "ADC",
     "Timestamp": "1245664332", // specific to seconds
     "ADC state information":
     {
     "Run data item 001": "CPU load rate" // feed back CPU load rate
     "Run data item 002": "bandwidth resources" // feed back bandwidth resources
     "Run data item 003": "device power" // feed backTbox power
     "Run data item 004": "network state, network strength" // feed back network state
     "Run data item 005": "storage resources" // feed back storage resource state
     "Data cycle": "10s", // the collection engine sends state data every 10s
     }
     "Collection engine ID3": "GW",
     "Timestamp": "1245664332", // specific to seconds
     "GW state information":
     {
     "Run data item 001": "network segment load rate" // feed back CPU load rate
     "Run data item 002": "CPU resources" // feed back bandwidth resources
     "Data cycle": " 1s", // the collection engine sends state data every 10s
     }
     }
```

The fuse engine monitors state data fed back by the collection engine in real time, and sends the fuse instruction to the collection engine through a DDS protocol when monitoring that the running state of the collection engine satisfies the fuse condition, where the fuse instruction needs to specify specific operations of the collection engine and contents. For example, when the fuse engine recognizes that the load rate of the MCU is greater than 80%, which affects the normal operation performance of the MPU, the fuse engine sends the fuse instruction to the collection engine, pointing out that the FC controller cannot collect data or reduce a frame rate for collection, otherwise, the MPU has an excessive load rate when processing picture/video data, which affects the normal operation of the MPU. The collection engine performs a fusion collection according to the contents in the fuse instruction and sends the data items involved in the fuse instruction to the fuse engine, and the fuse engine packages data and uploads the data to the cloud fuse management system.

The fuse instruction is in a struct format, the text format of which is as follows:

```
     {
     "Timestamp": "1245664332", // specific to seconds
     "Instruction type": "fuse instruction",
     Text rule:
     {
     {
     "Collection engine ID1": "FC",
     "FC fuse text":
     {
     "FC": "stop data collection"
     "Duration": "when the fuse event signal = 02"
     }
     }
     {
     "Collection engine ID2": "ADC",
     "ADC fuse text":
     {
     "Collect national standard data": "specific signals, number of signals" // national
 standard data "Collect user service class": "specific signals, number of signals"
 //specify user service data "Collection cycle": "consistent with the collection task";
     }
     }
     {
     "Collection engine ID3": "GW",
     "GW fuse text":
     {
     "Data filtering": "filtered data items",
     "Duration": "CPU load rate less than 50%"
     }
     }
     {
     "Collection engine IDn": "Tbox",
     "Tbox fuse text":
     {
     "Data limit": "only collect but not transfer", //aiming at the abnormal
     disconnection state of a network
     }
     }
     }
     ...}
```

When a real-time monitoring unit of the fuse engine monitors that the collection engine satisfies the fuse recovery condition, a fuse recovery instruction is sent through a DDS protocol, and the vehicle will not be limited by the fuse condition but collects and uploads data packages according to normal environmental conditions.

The fuse recovery instruction is in a struct format, the text format of which is as follows:

```
     {
     "Timestamp": "1245664332", // specific to seconds
     "Instruction type": "fuse recovery instruction",
     Text rule:
     {
     "Collection engine ID1": "FC",
     "FC fuse recovery text":
     {
     "FC": "normal data collection"
     "Collection rule": "consistent with the collection rule";
     }
     }
     }
```

According to the fuse control method for a vehicle data collection provided by the embodiment of the present application, a fuse file may be acquired, where the fuse file includes a fuse condition and a fuse strategy; the fuse strategy in the fuse file is transformed to obtain a fuse instruction corresponding to the fuse strategy; a running state of a collection engine is monitored in real time, and whether the running state of the collection engine satisfies the fuse condition is determined; when the running state of the collection engine satisfies the fuse condition, the fuse instruction is sent to the collection engine, to control the collection engine to perform a fuse collection according to the fuse instruction; thus, the problem that a collection quality is affected by abnormalities of a vehicle collection controller due to mass data is solved, and a fuse collection function is realized by configuring the collection fuse strategy in a cloud and acquiring data in a vehicle according to the fuse strategy, thereby improving the collection quality.

Next, a fuse control apparatus for a vehicle data collection according to an embodiment of the present application is described with reference to the drawings.

Fig. 8 is a schematic block diagram of a fuse control apparatus for a vehicle data collection according to an embodiment of the present application.

As shown in Fig. 8, the fuse control apparatus for a vehicle data collection includes: an acquisition module 100, a processing module 200, a monitoring and determination module 300, and a transfer control module 400.
The acquisition module 100 is configured to acquire a fuse file matched by a cloud according to configuration information, where the fuse file includes a fuse condition and a fuse strategy;
The processing module 200 is configured to transform the fuse strategy in the fuse file to obtain a fuse instruction corresponding to the fuse strategy;
The monitoring and determination module 300 is configured to monitor a running state of a collection engine in real time and determine whether the running state of the collection engine satisfies the fuse condition; and
The transfer control module 400 is configured to, when the running state of the collection engine satisfies the fuse condition, send the fuse instruction to the collection engine, to control the collection engine to perform a fuse collection according to the fuse instruction.

Optionally, the acquisition module 100 is specifically configured to: acquire the fuse file of the cloud according to the configuration information when a vehicle start signal is received and any fuse file is not detected out.

Optionally, in some embodiments, the fuse strategy includes collection stop, data classification collection, only collection without transfer, and data frequency reduction collection, where each fuse strategy corresponds to one or more fuse conditions, so that a vehicle side uses the corresponding fuse strategy to perform a fuse collection according to the fuse condition.

Optionally, in some embodiments, the data classification collection includes that data are classified according to data types, where the data types may include at least one of a user service class, national standard data, a data closed-loop class, and an operation analysis class; and each data type is given a corresponding priority level, where the priority level is used for representing a degree of importance of the corresponding data type, to upload data of the corresponding data types according to the priority levels.

Optionally, in some embodiments, in some embodiments, the frequency reduction collection includes: when all data need to be collected, a predetermined frequency is acquired to replace a current frequency for data collection, where the predetermined frequency is less than the current frequency.

Optionally, in some embodiments, the fuse file further includes a fuse recovery condition, and the transfer control module 400 is further configured to send a fuse recovery instruction to the collection engine when the running state of the collection engine satisfies the fuse recovery condition, to control the collection engine to perform a normal collection.

It should be noted that the embodiment of the apparatus and the embodiment of the method may correspond to each other and similar descriptions may refer to the embodiment of the method. To avoid repetition, details are not described herein again. Specifically, the apparatus shown in Fig. 8 may be correspondingly executed in the method of the embodiment of the present application, and the foregoing and other operations and/or functions of all modules in the apparatus are not repeated here for the sake of brevity in order to implement the corresponding flow in Fig. 1.

Fig. 9 is a schematic block diagram of a fuse control apparatus for a vehicle data collection according to an embodiment of the present application.

As shown in Fig. 9, the fuse control apparatus for a vehicle data collection includes: a receiving module 500, a matching module 600, and a sending module 700.
The receiving module 500 is configured to receive configuration information of a vehicle side;
The matching module 600 is configured to match a fuse file according to the configuration information, where the fuse file includes a fuse condition and a fuse strategy; and
The sending module 700 is configured to send the matched fuse file to the vehicle side so that the vehicle side transforms the fuse strategy in the fuse file to obtain a fuse instruction corresponding to the fuse strategy, and send the fuse instruction to a collection engine when a running state of the collection engine satisfies the fuse condition, to control the collection engine to perform a fuse collection according to the fuse instruction.

Optionally, the matching module 600 is further configured to: identify the vehicle side according to the configuration information; and match the fuse file in a fuse file library according to the configuration information after the identification succeeds.

Optionally, in some embodiments, editable fuse files configured in advance according to a vehicle configuration mapping table are stored in the fuse file library.

Optionally, in some embodiments, the fuse strategy includes collection stop, data classification collection, only collection without transfer, and data frequency reduction collection, where each fuse strategy corresponds to one or more fuse conditions, so that the vehicle side uses the corresponding fuse strategy to perform a fuse collection according to the fuse condition.

Optionally, in some embodiments, the data classification collection includes that data are classified according to data types, where the data types may include at least one of a user service class, national standard data, a data closed-loop class, and an operation analysis class; and each data type is given a corresponding priority level, where the priority level is used for representing a degree of importance of the corresponding data type, to upload data of the corresponding data types according to the priority levels.

Optionally, in some embodiments, in some embodiments, the frequency reduction collection includes: when all data need to be collected, a predetermined frequency is acquired to replace a current frequency for data collection, where the predetermined frequency is less than the current frequency.

Optionally, in some embodiments, the fuse file further includes a fuse recovery condition, so that when the running state of the collection engine satisfies the fuse recovery condition, the vehicle side sends a fuse recovery instruction to the collection engine, to control the collection engine to perform a normal collection.

It should be noted that the embodiment of the apparatus and the embodiment of the method may correspond to each other and similar descriptions may refer to the embodiment of the method. To avoid repetition, details are not described herein again. Specifically, the apparatus shown in Fig. 9 may be correspondingly executed in the method of the embodiment of the present application, and the foregoing and other operations and/or functions of all modules in the apparatus are not repeated here for the sake of brevity in order to implement the corresponding flow in Fig. 4.

The fuse control apparatus for a vehicle data collection according to the embodiment of the present application solve the problem that a collection quality is affected by abnormalities of a vehicle collection controller due to mass data, and realize a fuse collection function by configuring the collection fuse strategy in the cloud and acquiring data on the vehicle side according to the fuse strategy, thereby improving the collection quality.

In the description of this specification, the reference terms "one embodiment", "some embodiments", "an example", "a specific example", "some examples", or the like mean that specific features, structures, materials or characteristics described in conjunction with the embodiments or examples are included in at least one embodiment or example of the present application. In this specification, the schematic descriptions of the above terms do not necessarily refer to the same embodiment or example. Moreover, the specific features, structures, materials or characteristics described may be combined appropriately in one or N embodiments or examples. In addition, different embodiments or examples described in this specification and features of different embodiments or examples may be combined by those skilled in the art without conflicting with each other.

Furthermore, the terms "first" and "second" are only for the sake of description, and cannot be understood as indicating or implying the relative importance or implicitly indicating the quantity of the indicated technical features. Thus, features defined as "first" and "second" may expressly or implicitly include at least one of the features. In the description of the present application, "N" means at least two, e.g., two, three, etc., unless otherwise specified.

Any process or method described in the flowcharts or otherwise described herein may be understood as a module, a fragment or a portion representing a code including one or N executable instructions for implementing steps of a custom logical function or process, and the scope of the preferred embodiments of the present application includes additional implementations in which functions may not be performed in the order shown or discussed, including in a substantially simultaneous manner or in a reverse order according to the functions involved, as will be understood by those skilled in the art to which the embodiments of the present application belong.

The logics and/or steps represented in the flowcharts or otherwise described herein, for example, may be considered as a sequencing table of executable instructions for implementing logical functions, and may be embodied in any computer-readable medium for use with, or in conjunction with, instruction execution systems, apparatuses or devices (such as computer-based systems, systems including processors, or other systems that may fetch and execute instructions from the instruction execution systems, apparatuses or devices). With regard to this specification, the "computer-readable medium" may be any apparatus that may contain, store, communicate, propagate, or transmit a program for use with, or in conjunction with, the instruction execution systems, apparatuses or devices. More specific examples (non-exhaustive list) of the computer-readable medium include the following: an electrical connection portion (electronic apparatus) having one or N wires, a portable computer cartridge (magnetic apparatus), a random access memory (RAM), a read-only memory (ROM), an erasable programmable read-only memory (EPROM or flash memory), an optical fiber apparatus, and a portable compact disc read-only memory (CDROM). In addition, the computer-readable medium may even be paper or other suitable medium on which the program may be printed, because the program may be obtained electronically, for example, by optical scanning of the paper or other medium, followed by editing, interpreting or processing in other suitable ways as necessary, and then stored in a computer memory.

It should be understood that all portions of the present application may be implemented in hardware, software, firmware, or a combination thereof. In the above-mentioned embodiments, the N steps or methods may be implemented in software or firmware, which is stored in a memory and executed by a suitable instruction execution system. If implemented in hardware as in another embodiment, the steps or methods may be implemented by any of the following technologies known in the art, or a combination thereof: a discrete logic circuit having logic gates for implementing logic functions on data signals, an application specific integrated circuit having suitable combinational logic gates, a programmable gate array (PGA), a field programmable gate array (FPGA), etc.

Those of ordinary skill in the art could appreciate that all or part of the steps carried by the methods for implementing the above-mentioned embodiments may be completed by instructing relevant hardware through a program stored in a computer-readable storage medium, which program, when executed, includes one or a combination of the steps of the embodiments of the methods.

In addition, each functional unit in each embodiment of the present application may be integrated in one processing module, each unit may exist physically alone, or two or more units may be integrated in one module. The above-mentioned integrated modules may be implemented either in the form of hardware or in the form of software functional modules. The integrated modules may also be stored in a computer-readable storage medium if implemented in the form of software functional modules and sold or used as stand-alone products.

The above-mentioned storage medium may be a read-only memory, a magnetic disc, an optical disc, or the like. Although the embodiments of the present application are shown and described above, it can be understood that the above-mentioned embodiments are exemplary and should not be construed as limiting the present application. Changes, modifications, substitutions and variations may be made to the above embodiments by those of ordinary skill in the art within the scope of the present application.

## Claims

1. A fuse control method for a vehicle data collection, applied to a vehicle side, comprising the following steps:
acquiring a fuse file matched by a cloud according to configuration information, wherein the fuse file comprises a fuse condition and a fuse strategy;
transforming the fuse strategy in the fuse file to obtain a fuse instruction corresponding to the fuse strategy;
monitoring a running state of a collection engine in real time, and determining whether the running state of the collection engine satisfies the fuse condition; and
when the running state of the collection engine satisfies the fuse condition, sending the fuse instruction to the collection engine, to control the collection engine to perform a fuse collection according to the fuse instruction.

2. The method according to claim 1, wherein the step of acquiring a fuse file comprises:
acquiring the fuse file of the cloud according to the configuration information when a vehicle start signal is received and any fuse file is not detected out.

3. The method according to claim 1, wherein the fuse strategy comprises collection stop, data classification collection, only collection without transfer, and data frequency reduction collection, wherein each fuse strategy corresponds to one or more fuse conditions, so that the vehicle side uses the corresponding fuse strategy to perform the fuse collection according to the fuse condition.

4. The method according to claim 3, wherein the data classification collection comprises:
performing event level classification according to an emergency corresponding to each resource of the collection engine;
classifying data according to data types; and
giving each data type a corresponding priority level, wherein the priority level is used for representing a degree of importance of the corresponding data type, to collect data of different priority data types preferentially according to different levels of events.

5. The method according to claim 4, wherein
when the resource emergency of the collection engine is greater than a first threshold value, an advanced event level is triggered, and data of a high-priority data type are collected preferentially; when the resource emergency of the collection engine is less than or equal to the first threshold value and greater than a second threshold value, a medium event level is triggered, and data of a high-priority data type and data of a medium-priority data type are collected preferentially in turn; when the resource emergency of the collection engine is less than or equal to the second threshold value and greater than a third threshold value, a low event level is triggered, and data of a high-priority data type, data of a medium-priority data type and data of a low-priority data type are collected preferentially in turn; and when the resource emergency of the collection engine is less than or equal to the third threshold value, any event level is not triggered.

6. The method according to claim 4, wherein the frequency reduction collection comprises:
when the collection engine of the vehicle side triggers the advanced event level or the medium event level and needs to collect full data, acquiring a predetermined frequency to replace a current frequency for data collection, wherein the predetermined frequency is less than the current frequency.

7. The method according to claim 1, wherein the fuse file further comprises a fuse recovery condition, and a fuse recovery instruction is sent to the collection engine when the running state of the collection engine satisfies the fuse recovery condition, to control the collection engine to perform a normal collection.

8. A fuse control method for a vehicle data collection, applied to a cloud server, comprising the following steps:
receiving configuration information of a vehicle side;
matching a fuse file according to the configuration information, wherein the fuse file comprises a fuse condition and a fuse strategy; and
sending the matched fuse file to the vehicle side so that the vehicle side transforms the fuse strategy in the fuse file to obtain a fuse instruction corresponding to the fuse strategy, and sending the fuse instruction to a collection engine when a running state of the collection engine satisfies the fuse condition, to control the collection engine to perform a fuse collection according to the fuse instruction.

9. The method according to claim 8, wherein the step of matching a fuse file according to the configuration information comprises:
identifying the vehicle side according to the configuration information; and
matching the fuse file in a fuse file library according to the configuration information after the identification succeeds.

10. The method according to claim 9, wherein editable fuse files configured in advance according to a vehicle configuration mapping table are stored in the fuse file library.

11. The method according to claim 10, wherein the fuse strategy comprises collection stop, data classification collection, only collection without transfer, and data frequency reduction collection, wherein each fuse strategy corresponds to one or more fuse conditions, so that the vehicle side uses the corresponding fuse strategy to perform the fuse collection according to the fuse condition.

12. The method according to claim 11, wherein the data classification collection comprises:
performing event level classification according to an emergency corresponding to each resource of the collection engine;
classifying data according to data types; and
giving each data type a corresponding priority level, wherein the priority level is used for representing a degree of importance of the corresponding data type, to collect data of different priority data types preferentially according to different levels of events.

13. The method according to claim 12, wherein when the resource emergency of the collection engine is greater than a first threshold value, an advanced event level is triggered, and data of a high-priority data type are collected preferentially; when the resource emergency of the collection engine is less than or equal to the first threshold value and greater than a second threshold value, a medium event level is triggered, and data of a high-priority data type and data of a medium-priority data type are collected preferentially in turn; when the resource emergency of the collection engine is less than or equal to the second threshold value and greater than a third threshold value, a low event level is triggered, and data of a high-priority data type, data of a medium-priority data type and data of a low-priority data type are collected preferentially in turn; and when the resource emergency of the collection engine is less than or equal to the third threshold value, any event level is not triggered.

14. The method according to claim 12, wherein the frequency reduction collection comprises:
when the collection engine of the vehicle side triggers the advanced event level or the medium event level and needs to collect full data, acquiring a predetermined frequency to replace a current frequency for data collection, wherein the predetermined frequency is less than the current frequency.

15. The method according to claim 8, wherein the fuse file further comprises a fuse recovery condition, so that the vehicle side sends a fuse recovery instruction to the collection engine when the running state of the collection engine satisfies the fuse recovery condition, to control the collection engine to perform a normal collection.

16. A fuse control apparatus for a vehicle data collection using the fuse control method for a vehicle data collection according to any one of claims 1-7, comprising:
an acquisition module, configured to acquire a fuse file matched by a cloud according to configuration information, wherein the fuse file comprises a fuse condition and a fuse strategy;
a processing module, configured to transform the fuse strategy in the fuse file to obtain a fuse instruction corresponding to the fuse strategy;
a monitoring and determination module, configured to monitor a running state of a collection engine in real time and determine whether the running state of the collection engine satisfies the fuse condition; and
a transfer control module, configured to, when the running state of the collection engine satisfies the fuse condition, send the fuse instruction to the collection engine, to control the collection engine to perform a fuse collection according to the fuse instruction.

17. A fuse control apparatus for a vehicle data collection using the fuse control method for a vehicle data collection according to any one of claims 8-15, comprising:
a receiving module, configured to receive configuration information of a vehicle side;
a matching module, configured to match a fuse file according to the configuration information, wherein the fuse file comprises a fuse condition and a fuse strategy; and
a sending module, configured to send the matched fuse file to the vehicle side so that the vehicle side transforms the fuse strategy in the fuse file to obtain a fuse instruction corresponding to the fuse strategy, and send the fuse instruction to a collection engine when a running state of the collection engine satisfies the fuse condition, to control the collection engine to perform a fuse collection according to the fuse instruction.
